# EUROPÄISCHE PATENTSCHRIFT

(11) **EP 4 042 076 B1**
(45) Veröffentlichungstag und Bekanntmachung des Hinweises auf die Patenterteilung: **27.08.2025**
(21) Anmeldenummer: 20792276.6
(22) Anmeldetag: 07.10.2020
(51) Int. Cl.: F24S 25/20, F24S 25/65, H02S 30/10, F24S 25/67, H02S 20/25, H02S 20/23, H02S 40/36

(54) **RAHMEN EINES MODULS FÜR EIN MODULARES PHOTOVOLTAIKSYSTEM, DAMIT HERGESTELLTES MODUL UND MODULARES PHOTOVOLTAIKSYSTEM**
FRAME OF A MODULE FOR A MODULAR PHOTOVOLTAIC SYSTEM, MODULE PRODUCED THEREWITH, AND MODULAR PHOTOVOLTAIC SYSTEM
BÂTI D'UN MODULE POUR SYSTÈME PHOTOVOLTAÏQUE MODULAIRE, MODULE FABRIQUÉ AVEC LEDIT BÂTI ET SYSTÈME PHOTOVOLTAÏQUE MODULAIRE

(30) Priorität: 07.10.2019 AT 508442019
(43) Veröffentlichungstag der Anmeldung: 17.08.2022
(73) Patentinhaber: Stuphann, Helmut, 3202 Hofstetten (AT)
(72) Erfinder: Stuphann, Helmut, 3202 Hofstetten (AT)
(74) Vertreter: Margotti, Herwig Franz
(86) Internationale Anmeldenummer: PCT/AT2020/060354
(87) Internationale Veröffentlichungsnummer: WO 2021/068015

(56) Entgegenhaltungen:
- CH-A2- 708 859
- CN-A- 101 603 344
- CN-A- 104 320 050
- CN-U- 205 545 120
- DE-U1- 202009 005 145
- US-A1- 2010 162 641

## Beschreibung

Die Erfindung betrifft einen Rahmen eines Moduls für ein modulares Photovoltaiksystem, gemäß dem Oberbegriff des Anspruchs 1. Die Erfindung betrifft weiters ein Modul für ein modulares Photovoltaiksystem mit einem Rahmen und einem im Rahmen angeordneten Funktionselement. Die Erfindung betrifft schließlich ein modulares Photovoltaiksystem, das aus einer Vielzahl von Photovoltaik-Modulen zusammensetzbar ist.

Dachflächen von Wohnhäusern eignen sich besonders für die Anbringung von Solarenergie-Anlagen, wobei die Solarenergie-Anlagen entweder zur Umwandlung der Sonnenenergie in thermische Energie mittels thermischer Solarelemente oder zur Umwandlung der Sonnenenergie mittels Photovoltaikmodule ausgeführt sind. Bei einer modularen Ausführung der Solarenergie-Anlagen als Photovoltaiksysteme werden im Allgemeinen einzelne Photovoltaikmodule auf der Dachfläche zu einem Photovoltaiksystem zusammengefügt, wobei solche Photovoltaiksysteme sowohl auf Flachdächern als auch auf schrägen Dachflächen montiert werden können. Insbesondere bei schrägen Dachflächen kann das Photovoltaiksystem entweder als Aufdachanlage oder als Indachanlage errichtet werden.

Während bei Aufdachanlagen das Photovoltaiksystem auf einer Unterkonstruktion, die auf dem Dach befestigt ist, montiert wird, sind bei Indachanlagen die einzelnen Module des Photovoltaiksystems in das Dach integriert.

Hierbei weisen Indachanlagen gegenüber Aufdachanlagen den Vorteil auf, dass bei ihrer Errichtung Dachmaterial gespart wird, wodurch die Kosten für die Dacheindeckung signifikant reduziert werden können. Darüber hinaus sind Photovoltaik-Indachanlagen im Vergleich zu Photovoltaik-Aufdachanlagen ästhetisch ansprechender, da sie keine auffällige Unterkonstruktion benötigen, auf der die Photovoltaik-Anlage montiert ist, sondern zumindest einen Teil der Dacheindeckung ersetzen und sich somit harmonisch in das Gesamterscheinungsbild des Daches einfügen.

Bei Montagesystemen von Photovoltaik-Indachanlagen werden die einzelnen Module üblicherweise in mehreren übereinanderliegenden, horizontal verlaufenden Reihen angeordnet, wobei die Reihen einander überlappend vom Dachfirst zur Dachtraufe verlaufen.

Ein derartiges System ist beispielsweise aus der Patentanmeldung US 2018/0254738 bekannt. In dem Dokument wird ein System zur Montage von photovoltaischen Dachziegeln offenbart, wobei die photovoltaischen Dachziegel so konfiguriert sind, dass sie als Dachziegel dienen, wenn sie auf einem Dach eines Gebäudes platziert werden, wodurch das Gebäude vor Witterungseinflüssen geschützt wird. Gemäß einer im Dokument offenbarten Variante kann das Photovoltaik-Dachmodul auch eine Reihe von Abstandhaltern beinhalten. Zwischen einem ersten Photovoltaik-Dachziegel und einem angrenzenden Photovoltaik-Dachziegel kann ein entsprechender Abstandhalter positioniert werden, der den ersten Photovoltaik-Dachziegel und den angrenzenden Photovoltaik-Dachziegel mechanisch verbindet. Der Abstandshalter kann beispielsweise als Profilschiene ausgestaltet sein, oder die Spalten zwischen benachbarten Plattenkönnen können mit Vergussmaterial gefüllt werden, um eine Verbindung zwischen den benachbarten Platten zu bilden.

Aus einer weiteren Patentanmeldung US 2014/0069482 sind Solardachziegel bekannt, welche ein Substrat und ein auf dem Substrat aufgebrachtes Solarmodul umfassen, wobei die Solardachziegel bogenförmige Abdeckseiten aufweisen, die dazu ausgestaltet sind, die Abdeckseite des benachbarten Solardachziegels zu kontaktieren.

Bisher für Photovoltaik-Indachanlagen am Markt erhältliche Systeme weisen allerdings den Nachteil auf, dass ihre Montage sehr aufwändig ist. Dies hat mehrere Ursachen.

Einerseits ist es bei den bisher erhältlichen Montagesystemen notwendig, die einzelnen, nebeneinander angeordneten Module durch zusätzliche Verbindungselemente wie beispielsweise Profilschienen oder Vergussmaterial dicht zu verbinden, um ein Ansammeln von Wasser zwischen den einzelnen Modulen durch ein Ermöglichen des Abfließens des Wassers zu verhindern. Durch die Verwendung dieser zusätzlichen Verbindungselemente entsteht allerdings ein zusätzlicher Aufwand bei der Montage der Photovoltaik-Indachanlage.

Anderseits müssen bei bisher erhältlichen System bei einander überlappenden Modulen die Fugen zwischen den Photovoltaikmodulen aufwendig abgedichtet werden, um ein Eindringen von Wasser, insbesondere zu den sensiblen elektrischen und elektronischen Komponenten der Module, zu verhindern.

Herkömmliche Photovoltaikmodule weisen den Nachteil aufwändiger Fertigung auf bzw. bestehen oft aus einer Vielzahl unterschiedlicher Bestandteile, die allein schon aufgrund ihrer Vielfalt die Herstellung der Module verteuern und darüber hinaus mit großem Zeitaufwand zusammengebaut werden müssen. Oftmals kommen auch aufwändige Fertigungsmethoden, wie Tiefziehen, zum Einsatz.

Aus der CH 708 859 A2 sind Profilelemente zur Befestigung von Photovoltaikmodulen bekannt. Ein erstes Profilelement ist in Form eines an beiden Seiten offenen Hohlprofils ausgebildet, das an einem ersten Ende wenigstens einen Auflagebereich und eine Rinne aufweist und an einem zweiten Ende eine Befestigungsnut aufweist. Ein zweites Profilelement zur Befestigung von Photovoltaikmodulen ist in Form eines an beiden Seiten offenen Hohlprofils ausgebildet, das an einem ersten Ende wenigstens einen Auflagebereich und ein Abdeckelement aufweist, wobei das Abdeckelement an seiner dem zweiten Ende des Hohlprofils zugewandten Seite einen Eingreifschenkel aufweist. Zusätzlich sind aufwändig gestaltete Eckmodule vorgesehen, die für die Verbindung der Profilelemente und zur Verhinderung des Eindringens Regenwasser erforderlich sind. Ein Solarsystem umfasst mehrere erste Profilelemente, ein zweites Profilelement und ein Photovoltaikmodul, das auf den Auflagebereichen der ersten Profilelemente und des zweiten Profilelements aufliegt und mit diesen verklebt ist. Eine Indach- oder Aufdach-Solarsystemanordnung umfasst mehrere Solarsysteme, wobei der Eingreifschenkel des zweiten Profilelements eines ersten Solarsystems in die Rinne eines ersten Profilelements eines zweiten Solarsystems eingreift und dieses erste Profilelement auf der dem zweiten Profilelement gegenüberliegenden Seite des zweiten Solarsystems angeordnet ist. Nachteilig an diesem System ist hohe Anzahl an unterschiedlichen Bestandteilen, aus denen sich das Solarsystem zusammensetzt, sowie die Komplexität dieser Bestandteile. Auch die Montage eines solchen komplizierten Solarsystems auf Hausdächern gestaltet sich schwierig.

Aus der US 2010/0162641 A1 sind weitere Profilelemente zur Befestigung von Photovoltaikmodulen bekannt.

Daher besteht nach wie vor ein Bedarf an Systemen aus modularen Photovoltaikmodulen und Photovoltaikmodulen auf Basis eines Rahmens, welche einfach und kosteneffizient hergestellt und montiert werden können. Eine weitere Anforderung an ein Photovoltaikmodulsystem besteht darin, dass die Module nebeneinander in einer Ebene auf dem Dach angeordnet werden können, um den Aufbau am Dach möglichst niedrig halten und architektonische Anforderungen erfüllen zu können und die Nachteile bei der Montage von herkömmlichen modularen Photovoltaiksystemen, deren Module einander dachziegelartig überdecken, vermeiden zu können.

Die vorliegende Erfindung löst die gestellten Aufgaben durch Bereitstellen eines Rahmens eines Moduls für ein modulares Photovoltaiksystem mit den Merkmalen des Anspruchs 1, eines Moduls für ein modulares Photovoltaiksystem mit einem erfindungsgemäßen Rahmen und einem im Rahmen angeordneten Funktionselement, sowie eines aus diesen Modulen zusammensetzbaren modularen Photovoltaiksystems. Weitere Aspekte der Erfindung sind in den Unteransprüchen, der nachfolgenden Beschreibung und den Zeichnungen offenbart.

Der erfindungsgemäße Rahmen eines Moduls für ein modulares Photovoltaiksystem ist aus einem ersten und einem zweiten einander gegenüberliegenden Rahmenlängselementen und einem ersten und einem zweiten einander gegenüberliegenden Rahmenquerelementen zusammengesetzt, wobei die Rahmenquerelemente mit den Rahmenlängselementen verbunden sind. Die Rahmenlängselemente und die Rahmenquerelemente sind als Strangpressprofile oder Walzprofile ausgebildet. Von der Oberseite des ersten Rahmenlängselements erstreckt sich ein Längsüberdeckungsfalz vom Rahmen weg, und von der Oberseite des ersten Rahmenquerelements erstreckt sich ein Querüberdeckungsfalz vom Rahmen weg. Der Längsüberdeckungsfalz weist einen ersten Längsüberdeckungsfalz-Endbereich und einen zweiten Längsüberdeckungsfalz-Endbereich auf, wobei der Querüberdeckungsfalz einen ersten Querüberdeckungsfalz-Endbereich und einen zweiten Querüberdeckungsfalz-Endbereich aufweist, wobei der erste Längsüberdeckungsfalz-Endbereich und der erste Querüberdeckungsfalz-Endbereich freistehend ausgebildet sind und der zweite Längsüberdeckungsfalz-Endbereich und der zweite Querüberdeckungsfalz-Endbereich miteinander zu einem gemeinsamen Überdeckungsfalz-Endbereich verbunden sind, wobei - gemessen von einer Auflagefläche des Rahmens, d. h. von der Rahmenunterseite - die Unterseite des Längsüberdeckungsfalzes zumindest so hoch liegt wie die Oberseite des zweiten Rahmenlängselements und die Unterseite des Querüberdeckungsfalzes zumindest so hoch liegt wie die Oberseite des zweiten Rahmenquerelements. Der erfindungsgemäße Rahmen zeichnet sich dadurch aus, dass die Unterseite des freistehenden Querüberdeckungsfalz-Endbereichs zumindest so hoch liegt wie die Oberseite des freistehenden Längsüberdeckungs-Endbereichs und die Unterseite des gemeinsamen Eckbereichs der Überdeckungsfalze zumindest so hoch liegt wie die Oberseite des freistehenden Querüberdeckungsfalz-Endbereichs.

Es ist zu beachten, dass die Begriffe "Längs" und "Quer", wie in diesem Dokument verwendet, nur als geometrische Definitionen zu verstehen sind, nicht aber als Dimensionsangaben. Das heißt, dass beispielsweise die Rahmenlängselemente gleich lang oder kürzer sein können als die Rahmenquerelemente. Im Allgemeinen wird der Rahmen rechtwinkelig oder quadratisch ausgebildet sein, doch können für bestimmte Anwendungsfälle auch davon abweichende Geometrien vorgesehen sein, z.B. rautenförmig oder parallelogrammförmig.

Durch diese spezifische Rahmenkonstruktion können daraus hergestellte Module Seite an Seite und in einer Auflagefläche am Dach oder einer Wand eines Gebäudes angeordnet und mittels der Überdeckungsfalze derart miteinander verbunden werden, dass die Verbindung der benachbarten Module über ihre Überdeckungsfalze dicht ist und kein Wasser zwischen die Module gelangt.

Durch die Ausbildung der Rahmenelemente aus Strangpressprofilen ist der Rahmen besonders einfach herstellbar, beispielsweise durch Zuschneiden der Strangpressprofile auf die benötigten Längen und durch die Verbindung derselben durch entsprechende Verbindungsmittel wie Schrauben oder Winkel, oder durch Verlöten oder Verkleben. Als Alternative zu Strangpressprofilen können die Rahmen auch aus Walzprofilen hergestellt sein.

Für eine Vielzahl an Anwendungsfällen und für einfache Montage ist es bevorzugt, wenn sich der Längsüberdeckungsfalz über die gesamte Länge des ersten Rahmenlängselements erstreckt und sich der Querüberdeckungsfalz über die gesamte Länge des ersten Rahmenquerelements erstreckt, wobei der Längsüberdeckungsfalz und der Querüberdeckungsfalz im gemeinsamen Eckbereich miteinander verbunden sind. Die Verbindung des Längsüberdeckungsfalzes und des Querüberdeckungsfalzes im gemeinsamen Eckbereich kann beispielsweise durch Verlöten, Verkleben, Crimpen, etc. erfolgen. Weiters können der Längsüberdeckungsfalz und der Querüberdeckungsfalz im gemeinsamen Eckbereich Stoß an Stoß, insbesondere auf Gehrung geschnitten, oder einander überlappend angeordnet sein.

Zur verbesserten Verhinderung des Eindringens von Wasser zwischen benachbarten Modulen auf Basis der erfindungsgemäßen Rahmen ist in einer Ausführungsform der Erfindung vorgesehen, dass an der Oberseite des ersten oder zweiten Rahmenlängselements oder an der Unterseite des Längsüberdeckungsfalzes Dichtungen angeordnet sind und/oder dass an der Oberseite des ersten oder zweiten Rahmenquerelements oder an der Unterseite des Querüberdeckungsfalzes Dichtungen angeordnet sind.

Der verbesserten Abdichtung dient auch, wenn sich an der Oberseite des zweiten Rahmenlängselements über dessen Länge zumindest eine Nut und/oder zumindest ein Steg erstreckt und sich an der Unterseite des Längsüberdeckungsfalzes über dessen Länge zu den Nuten bzw. Stegen des zweiten Rahmenlängselements gegengleiche Stege und/oder Nuten erstrecken. Alternativ oder ergänzend dazu kann vorgesehen werden, dass sich an der Oberseite des zweiten Rahmenquerelements über dessen Länge zumindest eine Nut und/oder zumindest ein Steg erstreckt und sich an der Unterseite des Querüberdeckungsfalzes über dessen Länge zu den Nuten bzw. Stegen des zweiten Rahmenquerelements gegengleiche Stege und/oder Nuten erstrecken.

Zur Herstellung der Rahmenelemente im industriellen Maßstab ist es vorteilhaft, wenn der Längsüberdeckungsfalz einstückig mit dem ersten Rahmenlängselement ausgebildet ist und/oder der Querüberdeckungsfalz einstückig mit dem ersten Rahmenquerelement ausgebildet ist.

In der Praxis setzt sich ein erfindungsgemäßes Photovoltaiksystem aus einer Vielzahl von auf den erfindungsgemäßen Rahmen basierenden Modulen zusammen, die in mehreren Reihen benachbart zueinander angeordnet sind, d.h. in einer Matrix aus Spalten und Reihen. Die Verlegung der Module erfolgt dabei wie beim Dachdecken von unten nach oben, indem zunächst die erste (unterste) Reihe von rechts nach links verlegt wird, worauf die zweite Reihe wieder von rechts nach links hergestellt wird, und so weiter bis zur obersten Reihe. Wenn sich die Längsüberdeckungsfalze der Rahmen an der gegenüberliegenden Seite der Rahmen befinden, so erfolgt die Verlegung der Reihen von links nach rechts.

Um benachbart angeordnete Rahmen einer Spalte mit wenigen Handgriffen durch Zusammenstecken verlässlich miteinander verbinden zu können, sieht eine Ausführungsform der Erfindung vor, dass in der Außenwand eines der beiden Rahmenquerelemente ein Vorsprung ausgebildet ist und in der Außenwand des anderen der beiden Rahmenquerelemente eine Vertiefung oder ein Loch ausgebildet ist, wobei der Vorsprung des einen Rahmenquerelements der Vertiefung bzw. dem Loch des anderen Rahmenquerelements gegenüberliegt und die Vertiefung bzw. das Loch zumindest so groß dimensioniert ist wie der Vorsprung.

Um Module einer Reihe zusammenzufügen, ist weiters vorgesehen, dass in der Außenwand eines der beiden Rahmenlängselemente ein Vorsprung ausgebildet ist und in der Außenwand des anderen der beiden Rahmenlängselemente eine Vertiefung oder ein Loch angeordnet ist, wobei der Vorsprung des einen Rahmenlängselements der Vertiefung bzw. dem Loch des anderen Rahmenlängselements gegenüberliegt und die Vertiefung bzw. das Loch zumindest so groß dimensioniert ist wie der Vorsprung. Allerdings ist zu beachten, dass die Module einer Reihe nicht einfach auf die Rahmen der benachbarten Spalte in derselben Reihe aufgeschoben werden können, wenn das benachbarte Rahmenlängselement an seiner Oberfläche mit Stegen versehen ist oder der aufzuschiebende Rahmen an der Unterseite seines Längsüberdeckungsfalzes mit Stegen versehen ist. Damit das Zusammenfügen auch in diesem Fall funktioniert, ist weiters vorgesehen, dass die Vertiefung als gekrümmter oder schräger Kanal ausgebildet ist oder das Loch als gekrümmtes oder schräges Langloch ausgebildet ist und vorzugsweise der Vorsprung sich zu seinem freien Ende hin verjüngt. Somit können die benachbarten Rahmen derselben Reihe in einer schrägen bzw. gekrümmt verlaufenden Bewegung zusammengefügt werden.

Ein Aspekt des erfindungsgemäßen Rahmens liegt darin, dass die Unterseiten der Rahmenlängselemente und der Rahmenquerelemente in einer gemeinsamen Ebene liegen, die eine Auflagefläche bildet.

Um benachbarte Rahmen in hoher Packungsdichte nebeneinander anzuordnen, sollen die äußeren Seitenwände der Rahmenlängselemente und der Rahmenquerelemente für eine Seite-an-Seite-Anordnung mehrerer Rahmen ausgebildet sein.

Aufgrund ihrer Festigkeit, ihres geringen Preises und der industriellen Fertigungsmöglichkeit ist es bevorzugt, wenn die Rahmenlängselemente und die Rahmenquerelemente aus Aluminium oder einem, vorzugsweise faserverstärkten, Kunststoff bestehen.

In einer bevorzugten Ausführungsform des erfindungsgemäßen Rahmens ist im freistehenden ersten Endbereich des Längsüberdeckungsfalzes ein Ausschnitt ausgebildet. Dieser Ausschnitt dient, wenn mehrere Rahmen nebeneinander angeordnet sind, dazu, die miteinander verbundenen Rahmen gegen aufwärts strömendes Wasser, das bei starkem Wind mit Regen auftreten kann, abzudecken.

Um Materialdehnungen der Rahmen aufgrund starker Temperaturschwankungen, wie sie an Dächern unvermeidlich auftreten, kompensieren zu können, sind Abstände zwischen Teilbereichen der Rahmen vorgesehen. Damit solche Abstände für Materialdehnung am Rahmen nach innen hin zu einer Dichtung verlegt werden können, ist es vorteilhaft, wenn im freistehenden ersten Endbereich des Querüberdeckungsfalzes ein Ausschnitt ausgebildet ist.

Ein erfindungsgemäßes Modul für ein modulares Photovoltaiksystem umfasst einen Rahmen gemäß einer der oben geschilderten Ausführungsformen und zumindest ein im Rahmen angeordnetes Funktionselement, wobei der Rahmen eine Halterung aufweist, an der das Funktionselement in dichtender Weise befestigt ist. Gemäß einer bevorzugten Ausführungsform ist die Halterung aus Stegen, als U-Profil, als Rohrprofil oder als flache Dichtfläche ausgebildet, in denen/dem/der das Funktionselement aufgenommen ist. Das Funktionselement kann einerseits ein Photovoltaik-Element sein, es kann aber auch ausgewählt sein aus einer Abdeckplatte, einem Zierelement, einem Belüftungselement, einem Element mit zumindest einem Durchlass, einem Fensterelement, einem Ortgangelement und/oder einem Dachfirstelement. Somit kann in vorteilhafter Art und Weise das Funktionselement gemäß seinem Zweck ausgewählt und bereits vor der Montage des Moduls in die Halterung des Rahmens eingesetzt werden, was eine große Flexibilität bei der Montage auf dem Dach ermöglicht und des Weiteren die aufzuwendende Arbeitszeit wesentlich reduziert.

Ein erfindungsgemäßes modulares Photovoltaiksystem ist aus einer Vielzahl von oben erläuterten Modulen zusammensetzbar, wobei zumindest eines der Module ein Funktionselement in Form eines Photovoltaik-Elements aufweist. Somit kann das Photovoltaiksystem zumindest einen Teil einer Dacheindeckung oder auch die gesamte Dacheindeckung einsparen, indem zumindest ein Teil des Daches oder auch das gesamte Dach aus den derart ausgestalteten Modulen gebildet wird, wobei die Module eine Kombination aus Photovoltaik-Elementen, Zierelementen, Abdeckplatten, Belüftungselementen, Elementen mit einem Durchlass, Fensterelementen, Ortgangelementen und/oder einem Dachfirstelementen darstellen können, was eine große Flexibilität in der Gestaltung der Dachfläche erlaubt. Das erfindungsgemäße Photovoltaiksystem lässt sich hervorragend in eine Dacheindeckung integrieren, indem die die Module Seite-an-Seite anordenbar sind und die Unterseiten der Rahmen der Module eine Auflagefläche bilden, die in einer Ebene auf einer Dachunterkonstruktion aufliegt. Man vermeidet dadurch die herkömmliche "Dachziegelanordnung" von Modulen, bei der ein Modul teilweise über dem anderen liegt.

Die Erfindung wird nachfolgend anhand von beispielhaften Ausführungen unter Bezugnahme auf die Zeichnungen näher erläutert. In den Zeichnungen zeigen:
Fig. 1 einen erfindungsgemäßen Rahmen in Draufsicht;
Fig. 2 eine teilweise geschnittene Seitenansicht des Rahmens in Richtung des Pfeils L von Fig. 1 mit Blickrichtung auf die Außenseite des ersten Rahmenquerelements;
Fig. 3 eine teilweise geschnittene Seitenansicht des Rahmens in Richtung des Pfeils K von Fig. 1 mit Blickrichtung auf die Außenseite des zweiten Rahmenquerelements;
Fig. 4 eine teilweise geschnittene Seitenansicht des Rahmens in Richtung des Pfeils N von Fig. 1 mit Blickrichtung auf die Außenseite des ersten Rahmenlängselements;
Fig. 5 eine teilweise geschnittene Seitenansicht des Rahmens in Richtung des Pfeils M von Fig. 1 mit Blickrichtung auf die Außenseite des zweiten Rahmenlängselements;
Fig. 6 eine Querschnittsteilansicht des Rahmens entlang der Linie G-G von Fig. 1 mit Blickrichtung auf die Innenseite des ersten Rahmenquerelements;
Fig. 7 eine Querschnittsteilansicht des Rahmens entlang der Linie H-H von Fig. 1 mit Blickrichtung auf die Innenseite des zweiten Rahmenquerelements;
Fig. 8 eine Längsschnittsteilansicht des Rahmens entlang der Linie F-F von Fig. 1 mit Blickrichtung auf die Innenseite des ersten Rahmenlängselements;
Fig. 9 eine Längsschnittsteilansicht des Rahmens entlang der Linie J-J von Fig. 1 durch das erste Rahmenlängselement hindurch;
Fig. 10 eine Längsschnittsteilansicht des Rahmens entlang der Linie I-I von Fig. 1 mit Blickrichtung auf die Innenseite des zweiten Rahmenlängselements;
Fig. 11 ein Detail E der Draufsichten von Fig. 1 und Fig. 12;
Fig. 12 eine Draufsicht auf ein erfindungsgemäßes modulares Photovoltaiksystem mit vier Modulen mit jeweils einem Rahmen und einem Funktionselement;
Fig. 13 eine Querschnittsteilansicht des Photovoltaiksystems entlang der Linie A-A von Fig. 12;
Fig. 14 eine Querschnittsteilansicht des Photovoltaiksystems entlang der Linie B-B von Fig. 12;
Fig. 15 eine Längsschnittsteilansicht des Photovoltaiksystems entlang der Linie C-C von Fig. 12; und
Fig. 16 eine Längsschnittsteilansicht des Photovoltaiksystems entlang der Linie D-D von Fig. 12.

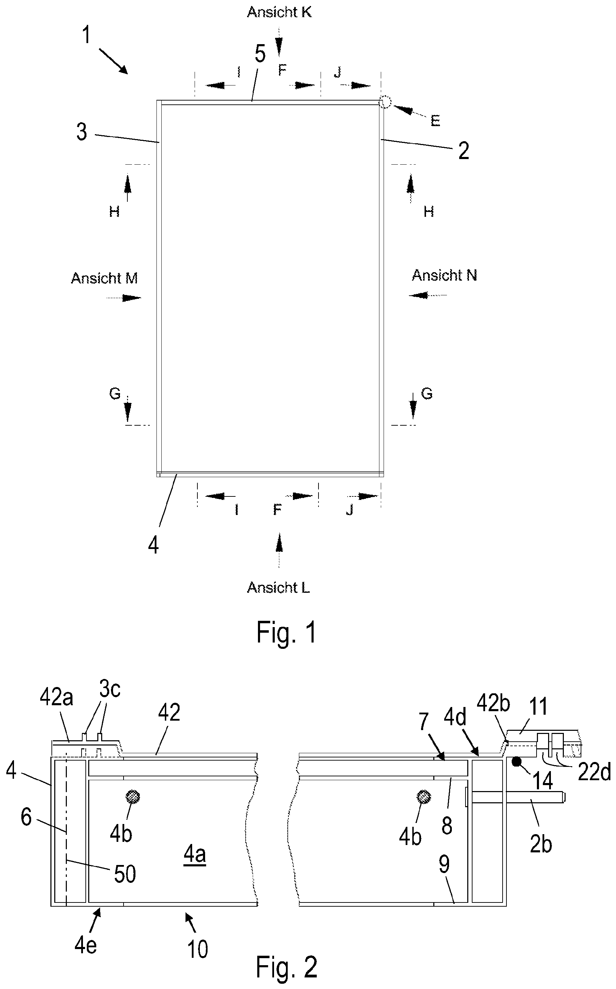

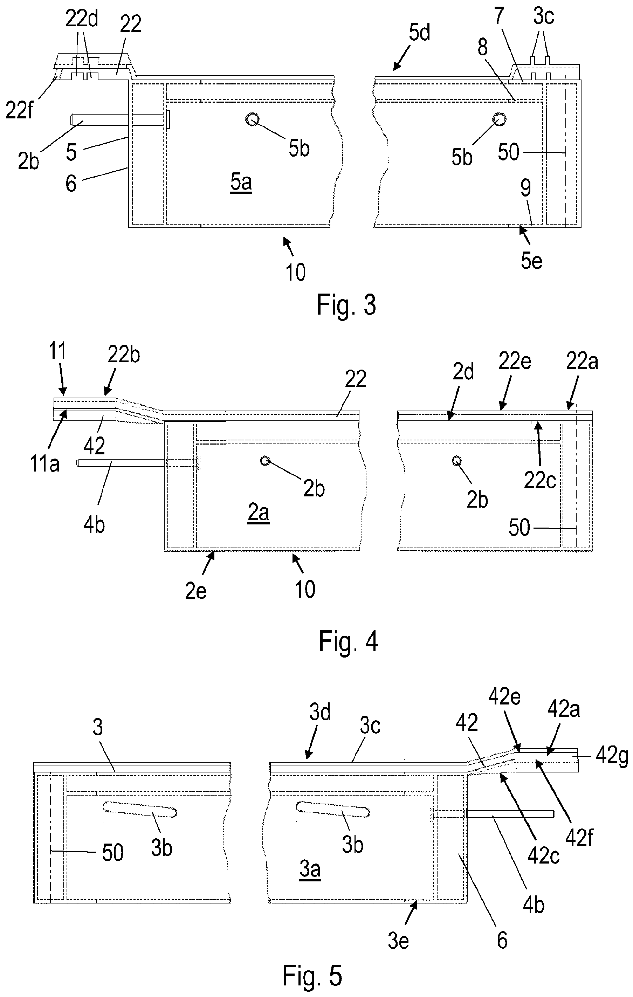

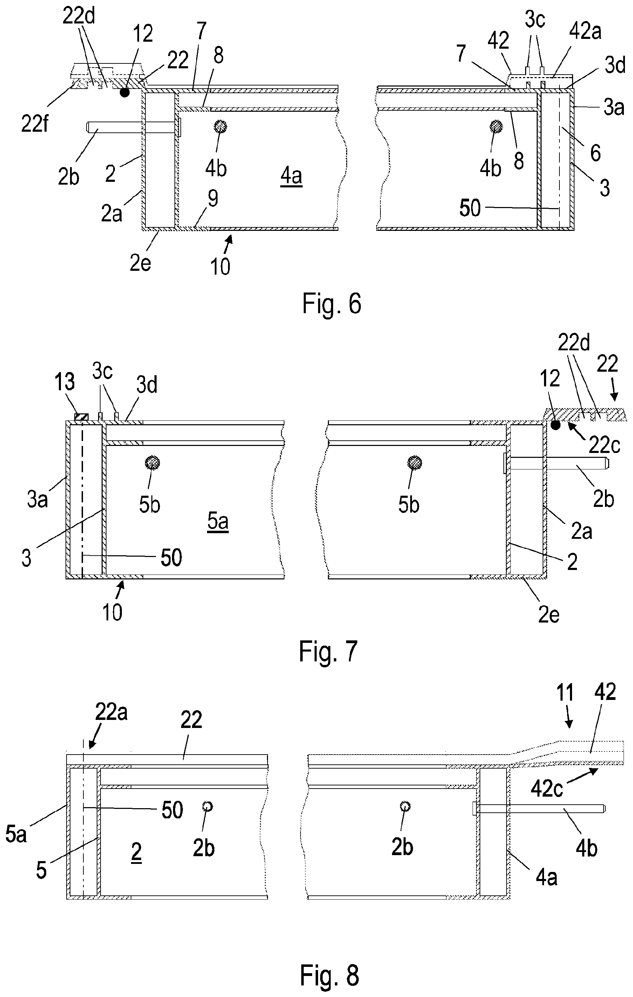

Zunächst wird auf die Figuren 1-10 Bezug genommen, die einen erfindungsgemäßen Rahmen 1 eines Moduls für ein modulares Photovoltaiksystem in verschiedenen Ansichten und Schnitten zeigen. Der Rahmen 1 ist aus einem ersten und einem zweiten einander gegenüberliegenden Rahmenlängselementen 2, 3 und einem ersten und einem zweiten einander gegenüberliegenden Rahmenquerelementen 4, 5 zusammengesetzt. Die Rahmenquerelemente 4, 5 sind mit den Rahmenlängselementen 2, 3 an ihren Enden verbunden, so dass sie ein Rechteck bilden. Die Rahmenlängselemente 2, 3 und die Rahmenquerelemente 4, 5 sind als Strangpressprofile, insbesondere aus Aluminium oder einem, vorzugsweise faserverstärkten, Kunststoff, ausgebildet. Jedes Strangpressprofil weist - im Querschnitt gesehen - einen Hohlkörper 6 auf, in diesem Ausführungsbeispiel einen rechteckigen Hohlkörper 6, der den Rahmenquerelementen 4, 5 und den Rahmenlängselementen 2, 3 Steifigkeit gegen Biegung und Verwindung verleiht. Vom Hohlkörper 6 erstrecken sich von seiner Oberseite und nahe seiner Oberseite über die Länge der Rahmenlängselemente 2, 3 und der Rahmenquerelemente 4, 5 verlaufende Stege 7, 8 nach innen. Diese Stege 7, 8 dienen zur dichtenden Aufnahme von Funktionselementen, insbesondere von Photovoltaik-Elementen, aber auch von Funktionselementen, die aus Abdeckplatten, Zierelementen, Belüftungselementen, Elementen mit zumindest einem Durchlass, Fensterelementen, Ortgangelementen und/oder Dachfirstelementen ausgewählt sind. Von der Unterseite des Hohlkörpers 6 des Strangpressprofils erstrecken sich über die Länge der Rahmenlängselemente 2, 3 und der Rahmenquerelemente 4, 5 verlaufende Stege 9 nach innen, die zusammen mit der Unterseite des Hohlkörpers des Strangpressprofils eine Auflagefläche 10 des Rahmens 1 bilden. Die äußeren Seitenwände 2a, 3a, 4a, 5a der Rahmenlängselemente 2, 3 und der Rahmenquerelemente 4, 5 sind für eine Seite-an-Seite-Anordnung mehrerer Rahmen 1 ausgebildet.

Von der Oberseite 2d des ersten Rahmenlängselements 2 erstreckt sich ein Längsüberdeckungsfalz 22 vom Rahmen 1 weg nach außen über die Länge des ersten Rahmenlängselements 2. Der Längsüberdeckungsfalz 22 weist einen ersten Längsüberdeckungsfalz-Endbereich 22a und einen zweiten Längsüberdeckungsfalz-Endbereich 22b auf. Von der Oberseite 4d des ersten Rahmenquerelements 4 erstreckt sich ein Querüberdeckungsfalz 42 vom Rahmen 1 weg nach außen. Der Querüberdeckungsfalz 42 weist einen ersten Querüberdeckungsfalz-Endbereich 42a und einen zweiten Querüberdeckungsfalz-Endbereich 42b auf. Der erste Längsüberdeckungsfalz-Endbereich 22a und der erste Querüberdeckungsfalz-Endbereich 42a sind freistehend ausgebildet. Der zweite Längsüberdeckungsfalz-Endbereich 22b und der zweite Querüberdeckungsfalz-Endbereich 42b sind miteinander zu einem gemeinsamen Überdeckungsfalz-Endbereich 11 verbunden sind, wobei - gemessen von der Auflagefläche 10 - die Unterseite 22c des Längsüberdeckungsfalzes 22 zumindest so hoch liegt wie die Oberseite 3d des zweiten Rahmenlängselements 3 und die Unterseite 42c des Querüberdeckungsfalzes 42 zumindest so hoch liegt wie die Oberseite 5d des zweiten Rahmenquerelements 5. Die Unterseite 42f des freistehenden ersten Querüberdeckungsfalz-Endbereichs 42a liegt zumindest so hoch wie die Oberseite des freistehenden ersten Längsüberdeckungs-Endbereichs 22a. Die Unterseite 11a des gemeinsamen Überdeckungsfalz-Eckbereichs 11 liegt zumindest so hoch wie die Oberseite 42e des freistehenden ersten Querüberdeckungsfalz-Endbereichs 42a. Bevorzugt ist der Längsüberdeckungsfalz 22 einstückig mit dem ersten Rahmenlängselement 2 ausgebildet. Ebenso bevorzugt ist der Querüberdeckungsfalz 42 einstückig mit dem ersten Rahmenquerelement 4 ausgebildet. Befestigungsschrauben 50 sind in den Figuren als strichpunktierte Linie eingezeichnet. Die Position der Befestigungsschrauben 50 in den Rahmen 1 ist so, dass sie in eingebauter Lage vom Querüberdeckungsfalz 42 und vom Längsüberdeckungsfalz 22 benachbarter Rahmen 1 abgedeckt werden und nicht sichtbar sind. Dies bietet Vorteile für Dichtheit, Optik und Kosten des Photovoltaiksystems, da keine Dichtscheiben verwendet werden müssen.

Die Verbindung des zweiten Längsüberdeckungsfalz-Endbereichs 22b und des zweiten Querüberdeckungsfalz-Endbereichs 42b zum gemeinsamen Überdeckungsfalz-Endbereich 11 kann durch Verlöten, Verkleben, Crimpen, etc. erfolgen. Dazu können entweder der zweite Längsüberdeckungsfalz-Endbereich 22b und der zweite Querüberdeckungsfalz-Endbereich 42b so abgeschnitten werden, z.B. auf Gehrung, dass die Schnittkanten dieser Endbereiche 22b, 42b Seite an Seite aneinander anliegen und durch Verkleben, Verlöten, etc. dicht miteinander verbunden werden. Oder es werden der zweite Längsüberdeckungsfalz-Endbereich 22b und der zweite Querüberdeckungsfalz-Endbereich 42b übereinanderliegend angeordnet und miteinander verbunden.

Für hohe Dichtwirkung können an der Oberseite des ersten oder zweiten Rahmenlängselements 2, 3 oder an der Unterseite des Längsüberdeckungsfalzes 22 Dichtungen 12, 13 angeordnet sein. In ähnlicher Weise können an der Oberseite des ersten oder zweiten Rahmenquerelements 4, 5 oder an der Unterseite des Querüberdeckungsfalzes 42 Dichtungen 14 angeordnet sein.

Um benachbarte Rahmen 1 gegen Wassereintritt abzudichten, sind an der Oberseite 3d des zweiten Rahmenlängselements 3 über dessen Länge verlaufend zwei Stege 3c ausgebildet, und es erstrecken sich an der Unterseite 22c des Längsüberdeckungsfalzes 22 über dessen Länge zu den Stegen 3c des zweiten Rahmenlängselements 3 gegengleiche Nuten 22d. Beim Verbinden der benachbarten Rahmen 1 greifen die Stege 3c in die Nuten 22d ein und bilden dadurch einerseits einen Labyrinthgang, durch den auch von Wind angetriebenes Wasser nicht hindurchfließen kann. Andererseits bilden die Nuten 22d Abflüsse für das wenige Wasser, das eventuell in diesen Labyrinthgang eingedrungen ist.

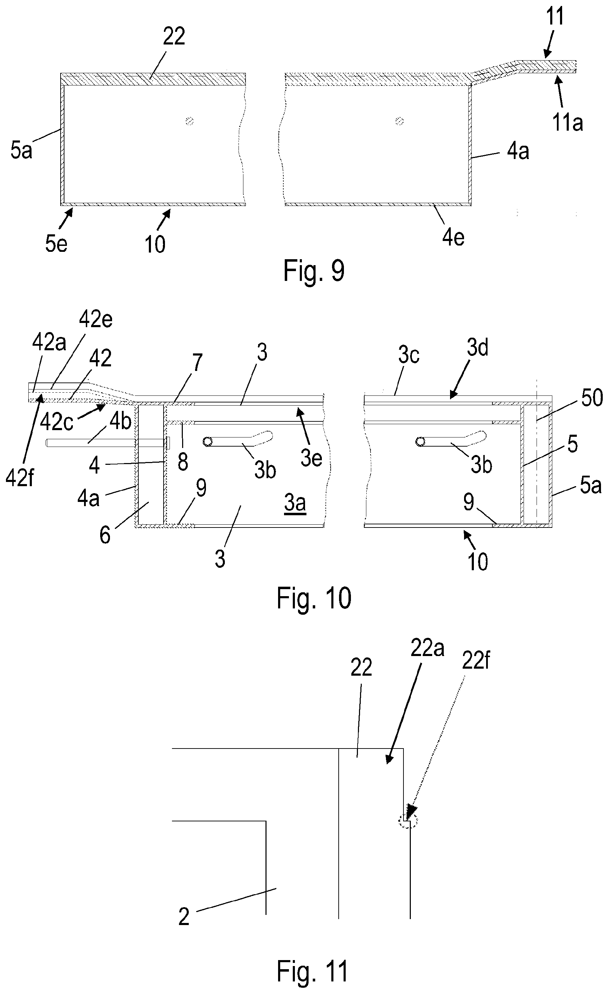

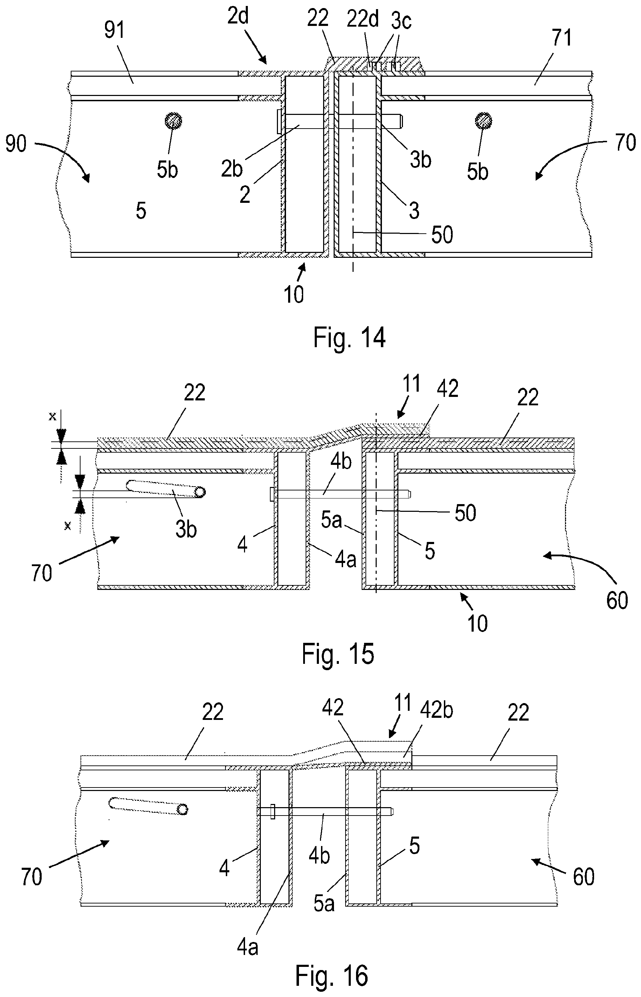

Es ist vorgesehen, dass benachbarte Rahmen 1 in Form einer Matrix aus Spalten und Reihen miteinander verbunden werden können, wobei die Verbindung vorzugsweise durch Zusammenstecken der Rahmen 1 von rechts nach links und von unten nach oben erfolgt. Das heißt, es wird zunächst die erste (unterste) Reihe von rechts nach links verlegt, worauf die zweite Reihe wieder von rechts nach links hergestellt wird, und so weiter bis zur obersten Reihe. Zu diesem Zweck sind in der äußeren Seitenwand 2a des ersten Rahmenlängselements 2 zwei Vorsprünge 2b in Form von Stiften ausgebildet und sind in der äußeren Seitenwand 3a des zweiten Rahmenlängselements 3 Löcher 3b ausgebildet. Die Vorsprünge 2b des ersten Rahmenlängselements 2 liegen den Löchern 3b des zweiten Rahmenlängselements 3 gegenüber, und die Löcher 3b sind zumindest so groß dimensioniert wie die Vorsprünge 2b. Damit die benachbarten Rahmen 1 auch dann in einer Schiebebewegung zusammenfügbar sind, wenn sich an der Oberseite 3d des zweiten Rahmenlängselements Stege 3c befinden und wenn sich an der Unterseite 22c des Längsüberdeckungsfalzes 22 Nuten 22d befinden, ist vorgesehen, die Löcher 3b als gekrümmte und/oder schräge Langlöcher auszubilden, wobei der Höhenunterschied x am Beginn und am Ende des Langlochs zumindest so groß ist wie die Höhe der Stege 3c bzw. der Nuten 22d (siehe Fig. 15). In Fig. 10 ist das Loch 3b beispielhaft als Langloch mit einem Knick ausgeführt. Diese Ausführungsform stellt die bevorzugte Ausführungsform dar. Bevorzugt verjüngt sich der stiftförmige Vorsprung 2b zu seinem freien Ende hin, um das Einführen des Vorsprungs 2b in das Loch 3b zu erleichtern.

Um die Rahmen 1 in einer Spalte der Matrixanordnung zusammenzustecken ist in der äußeren Seitenwand 4a des ersten Rahmenquerelements 4 ein Vorsprung 4b in Form eines Stifts ausgebildet. Weiters ist in der Außenwand 5a des zweiten Rahmenquerelements 5 ein Loch 5b ausgebildet. Der Vorsprung 4b des ersten Rahmenquerelements 4 liegt dem Loch 5b des zweiten Rahmenquerelements 5 gegenüber. Das Loch 5b ist zumindest so groß dimensioniert wie der Vorsprung 4b.

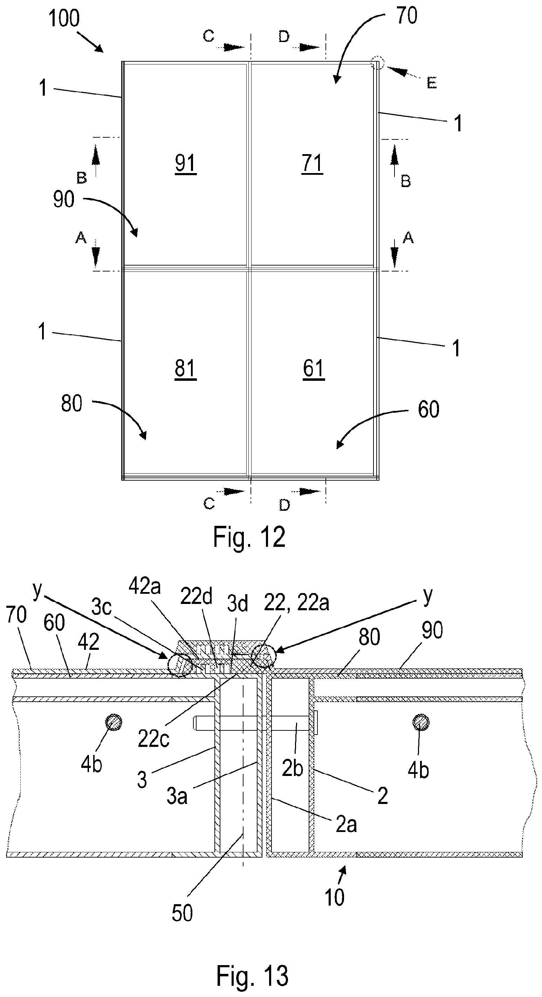

Um zu verhindern, dass an der gemeinsamen Ecke von vier zusammengefügten Rahmen 1 aufwärts strömendes Wasser in die Ecke eindringen kann, ist im freistehenden ersten Endbereich 22a des Längsüberdeckungsfalzes 22 ein Ausschnitt 22f ausgebildet. Weiters ist im freistehenden ersten Endbereich 42a des Querüberdeckungsfalzes 42 ein Ausschnitt 42g ausgebildet, wodurch ein vorzusehender Abstand y (siehe Fig. 13) für Materialdehnung des Rahmens 1 nach innen hin verlagert werden kann.

Die Merkmale des Rahmens 1 erlauben es, Rahmen 1 Seite an Seite in einer Matrixanordnung in einer Auflagefläche 10 miteinander zu verbinden, wobei sichergestellt ist, dass zwischen die Rahmen 1 kein Wasser eindringt. Das Konzept des Rahmens 1 beruht darauf, dass die vier Eckbereiche des Rahmens 1 unterschiedliche Höhen aufweisen, so dass beim Zusammenfügen von vier Rahmen 1 in zwei Spalten und zwei Reihen die benachbarten Rahmen 1 einander im gemeinsamen Eckbereich dieser vier Rahmen in vier unterschiedlichen Niveaus überlappen. Das unterste Niveau, das quasi eine Referenzebene darstellt, wird von der Oberseite 3d des zweiten Rahmenlängselements 3 und der Oberseite 5d des zweiten Rahmenquerelements 5 gebildet, wobei vor allem der gemeinsame Eckbereich des zweiten Rahmenlängselements 3 und des zweiten Rahmenquerelements 5 relevant ist. Das zweite Niveau ist durch den freistehenden ersten Längsüberdeckungsfalz-Endbereich 22a definiert, der höher liegt als die Oberseite 3d, 5d des zweiten Rahmenlängselements 3 und des zweiten Rahmenquerelements 5. Über diesem zweiten Niveau ist als drittes Niveau der freistehende erste Querüberdeckungsfalz-Endbereich 42a vorgesehen. Das vierte Niveau, das das höchste Niveau ist, wird vom gemeinsamen Überdeckungsfalz-Endbereich 11 gebildet. Die unterschiedlichen Niveaus können durch Kröpfung der entsprechenden Teile bzw. Abschnitte des Rahmens 1 realisiert werden.

Ein erfindungsgemäßes modulares Photovoltaiksystem 100 mit Modulen 60, 70, 80, 90, die jeweils einen Rahmen 1 und Funktionselemente 61, 71, 81, 91 umfassen, wird nachfolgend anhand der Figuren 12 bis 16 erläutert, um das Konzept der wasserdichten Überlappung der Module 60, 70, 80, 90 mittels ihrer Rahmen 1 zu verdeutlichen. Soweit in den Figuren 12 bis 16 Rahmenteile dargestellt und mit Bezugszeichen versehen sind, wird zusätzlich auch auf die Darstellungen der Figuren 1 bis 11 Bezug genommen und zur Vermeidung von Wiederholungen auf die obigen Erklärungen dieser Rahmenteile verwiesen, wobei gleiche Bezugszeichen gleiche Teile bezeichnen. Die Funktionselemente 61, 71, 81, 91 der Module 60, 70, 80, 90 sind in Halterungen befestigt, die aus den innenseitigen Stegen 7,8 der Rahmen 1 bestehen. Zusammen mit dem Hohlkörper 6 des Strangpressprofils, aus dem die Rahmen 1 gefertigt sind, ergibt sich so ein U-Profil, das die Ränder der Funktionselemente 61, 71, 81, 91 umschließt. Die Funktionselemente 61, 71, 81, 91 sind einerseits Photovoltaik-Elemente, können andererseits aber auch aus einer Abdeckplatte, einem Zierelement, einem Belüftungselement, einem Element mit zumindest einem Durchlass, einem Fensterelement, einem Ortgangelement und/oder einem Dachfirstelement ausgewählt sein.

Das in den Figuren 12 bis 16 beispielhaft dargestellte modulare Photovoltaiksystem 100 umfasst vier Module 60, 70, 80, 90. Das Photovoltaiksystem 100 wird zusammengebaut, indem zunächst auf einem Untergrund, wie einer Dachunterkonstruktion, das erste Modul 60 aufgelegt und montiert wird. Als nächstes wird das zweite Modul 70 oberhalb des ersten Moduls 60 angeordnet, so dass das zweite Rahmenquerelement 5 des ersten Moduls 60 und das erste Rahmenquerelement 4 des zweiten Moduls 70 Seite an Seite liegen und der Querüberdeckungsfalz 42 des zweiten Moduls 70 das zweite Rahmenquerelement 5 des ersten Moduls 60 überdeckt. Zur sicheren Verbindung greift der als Stift ausgebildete Vorsprung 4b des ersten Rahmenquerelements 4 des zweiten Moduls 70 in das Loch 5b des zweiten Rahmenquerelements 5 des ersten Moduls 60 ein. Als nächstes wird das dritte Modul 80 in das Photovoltaiksystem 100 eingefügt, indem es neben dem ersten Modul 60 (in Fig. 12 links vom ersten Modul 60) so angeordnet wird, dass das zweite Rahmenlängselement 3 des ersten Moduls 60 Seite an Seite neben dem ersten Rahmenlängselement 2 des dritten Moduls 80 liegt und die Vorsprünge 2b (Stifte) der äußeren Seitenwand 2a des ersten Rahmenlängselements 2 des dritten Moduls 80 in die Langlöcher 3b in der äußeren Seitenwand 3a des zweiten Rahmenlängselements 3 eingreifen und der Längsüberdeckungsfalz 22 des dritten Moduls 80 das zweite Rahmenlängselement 3 des ersten Moduls 60 überdeckt. Dann wird das dritte Modul 80 nach unten in seine Endposition verschoben, in der die Stege 3c an der Oberseite 3d des zweiten Rahmenlängselements 3 des ersten Moduls 60 in die an der Unterseite 22c des Längsüberdeckungsfalzes 22 des dritten Moduls 80 ausgebildeten Nuten 22d eingreifen. Schließlich wird das vierte Modul 90 neben dem zweiten Modul 70 und oberhalb des dritten Moduls 80 angeordnet und, ähnlich wie für das zweite und dritte Modul 70, 80 oben beschrieben, so verschoben, dass in seiner Endposition der Längsüberdeckungsfalz 22 des vierten Moduls 90 das zweite Rahmenlängselement 3 des zweiten Moduls 70 überdeckt und der Querüberdeckungsfalz 42 des vierten Moduls 90 das zweite Rahmenquerelement 5 des dritten Moduls 70 überdeckt. Wie am besten in Fig. 13 und 15 zu sehen ist, liegen im gemeinsamen Eckbereich der vier Module 60, 70, 80 90 Abschnitte aller vier Module 60, 70, 80, 90 übereinander. Aufgrund der Gestaltung der Rahmen 1 ist jedoch auch dieser gemeinsame Eckbereich der vier Module 60, 70, 80 90 dicht gegen Eindringen von Wasser. Fig. 13 zeigt zuunterst das Modul 60 (in der Zeichnung links). Man erkennt sein zweites Rahmenlängselement 3 und die äußere Seitenwand 3a des zweiten Rahmenlängselements 3 sowie die sich auf der Oberseite 3d des zweiten Rahmenlängselements 3 befindlichen Stege 3c. Rechts vom Modul 60 ist das Modul 80 angeordnet. Man erkennt dessen erstes Rahmenlängselement 2 mit seiner äußeren Seitenwand 2a und dem Längsüberdeckungsfalz 22 mit Nuten 22d an seiner Unterseite 22c. Der Längsüberdeckungsfalz 22 des Moduls 80 überdeckt das Rahmenlängselement 3 des Moduls 60. Auf der linken Seite von Fig. 13 ist vom Modul 70 der Querüberdeckungsfalz 42 zu sehen, dessen freistehender erster Querüberdeckungsfalz-Endbereich 42a den Längsüberdeckungsfalz 22 des Moduls 80 überdeckt. Auf der rechten Seite von Fig. 13 ist vom Modul 90 der gemeinsame Überdeckungsfalz-Endbereich 11 zu sehen, der den freistehenden ersten Querüberdeckungsfalz-Endbereich 42a des Moduls 70 überdeckt. Abstände für Materialdehnung sind mit den Pfeilen y bezeichnet. Auf die oben beschriebene Weise lassen sich modulare Photovoltaiksysteme 100 beliebiger Größe zusammenbauen. Wesentlich an diesem Photovoltaiksystem 100 ist auch, dass die Module 60, 70, 80, 90 Seite-an-Seite anordenbar sind und die Unterseiten der Rahmen 1 der Module 60, 70, 80, 90 eine Auflagefläche 10 auf einer Dachunterkonstruktion bilden. So kann im Gegensatz zum Stand der Technik eine "Dachziegelanordnung", wo ein Modul mit seiner Unterseite teilweise auf dem anderen liegt, vermieden werden.

### Bezugszeichenliste

- 1: Rahmen
- 2: erstes Rahmenlängselement
- 2a: äußere Seitenwand des ersten Rahmenlängselements
- 2b: Vorsprung (Stift) in der äußeren Seitenwand des ersten Rahmenlängselements
- 2d: Oberseite des ersten Rahmenlängselements
- 2e: Unterseite des ersten Rahmenlängselements
- 3: zweites Rahmenlängselement
- 3a: äußere Seitenwand des zweiten Rahmenlängselements
- 3b: Loch (Langloch, schräg oder gekrümmt) in der äußeren Seitenwand des zweiten Rahmenlängselements
- 3c: Steg an der Oberseite des zweiten Rahmenlängselements
- 3d: Oberseite des zweiten Rahmenlängselements
- 3e: Unterseite des zweiten Rahmenlängselements
- 4: erstes Rahmenquerelement
- 4a: äußere Seitenwand des ersten Rahmenquerelements
- 4b: Vorsprung (Stift) in der äußeren Seitenwand des ersten Rahmenquerelements
- 4d: Oberseite des ersten Rahmenquerelements
- 4e: Unterseite des ersten Rahmenquerelements
- 5: zweites Rahmenquerelement
- 5a: äußere Seitenwand des zweiten Rahmenquerelements
- 5b: Loch in der äußeren Seitenwand des zweiten Rahmenquerelements
- 5d: Oberseite des zweiten Rahmenquerelements
- 5e: Unterseite des zweiten Rahmenquerelements
- 6: Hohlkörper des Strangpressprofils
- 7,8,9: innenseitige Stege des Strangpressprofils
- 10: Auflagefläche des Rahmens
- 11: gemeinsamer Überdeckungsfalz-Endbereich
- 11a: Unterseite des gemeinsamen Überdeckungsfalz-Endbereichs
- 12: Dichtung an der Unterseite des Längsüberdeckungsfalzes
- 13: Dichtung an der Oberseite des zweiten Rahmenlängselements
- 14: Dichtung an der Unterseite des Querüberdeckungsfalzes
- 22: Längsüberdeckungsfalz
- 22a: erster Längsüberdeckungsfalz-Endbereich (freistehend)
- 22b: zweiter Längsüberdeckungsfalz-Endbereich
- 22c: Unterseite des Längsüberdeckungsfalzes
- 22d: Nut an der Unterseite des Längsüberdeckungsfalzes
- 22e: Oberseite des ersten Längsüberdeckungsfalz-Endbereichs
- 22f: Ausschnitt im freistehenden ersten Endbereich des Längsüberdeckungsfalzes
- 42: Querüberdeckungsfalz
- 42a: erster Querüberdeckungsfalz-Endbereich (freistehend)
- 42b: zweiter Querüberdeckungsfalz-Endbereich
- 42c: Unterseite des Querüberdeckungsfalzes
- 42e: Oberseite des ersten Querüberdeckungsfalz-Endbereichs
- 42f: Unterseite des ersten Querüberdeckungsfalz-Endbereichs
- 42g: Ausschnitt im freistehenden ersten Endbereich des Querüberdeckungsfalzes
- 50: Befestigungsschraube
- 60: Photovoltaikmodul
- 61: Funktionselement
- 70: Photovoltaikmodul
- 71: Funktionselement
- 80: Photovoltaikmodul
- 81: Funktionselement
- 90: Photovoltaikmodul
- 91: Funktionselement
- 100: modulares Photovoltaiksystem
- x: Höhenunterschied
- y: Abstand

## Patentansprüche

1. Rahmen (1) eines Moduls (60, 70, 80 90) für ein modulares Photovoltaiksystem (100), wobei der Rahmen (1) aus einem ersten und einem zweiten einander gegenüberliegenden Rahmenlängselementen (2, 3) und einem ersten und einem zweiten einander gegenüberliegenden Rahmenquerelementen (4, 5) zusammengesetzt ist, wobei die Rahmenquerelemente (4, 5) mit den Rahmenlängselementen (2, 3) verbunden sind, wobei die Rahmenlängselemente (2, 3) und die Rahmenquerelemente (4, 5) als Strangpressprofile oder Walzprofile ausgebildet sind, wobei sich von der Oberseite (2d) des ersten Rahmenlängselements (2) ein Längsüberdeckungsfalz (22) vom Rahmen (1) weg erstreckt und wobei sich von der Oberseite (4d) des ersten Rahmenquerelements (4) ein Querüberdeckungsfalz (42) vom Rahmen (1) weg erstreckt, wobei der Längsüberdeckungsfalz (22) einen ersten Längsüberdeckungsfalz-Endbereich (22a) und einen zweiten Längsüberdeckungsfalz-Endbereich (22b) aufweist, wobei der Querüberdeckungsfalz (42) einen ersten Querüberdeckungsfalz-Endbereich (42a) und einen zweiten Querüberdeckungsfalz-Endbereich (42b) aufweist, wobei der erste Längsüberdeckungsfalz-Endbereich (22a) und der erste Querüberdeckungsfalz-Endbereich (42a) freistehend ausgebildet sind und der zweite Längsüberdeckungsfalz-Endbereich (22b) und der zweite Querüberdeckungsfalz-Endbereich (42b) miteinander zu einem gemeinsamen Überdeckungsfalz-Endbereich (11) verbunden sind, wobei die Unterseite (22c) des Längsüberdeckungsfalzes (22) zumindest so hoch liegt wie die Oberseite (3d) des zweiten Rahmenlängselements (3) und die Unterseite (42c) des Querüberdeckungsfalzes (42) zumindest so hoch liegt wie die Oberseite (5d) des zweiten Rahmenquerelements (5), **dadurch gekennzeichnet, dass**
die Unterseite (42f) des freistehenden ersten Querüberdeckungsfalz-Endbereichs (42c) zumindest so hoch liegt wie die Oberseite (22e) des freistehenden ersten Längsüberdeckungs-Endbereichs (22a) und die Unterseite (11a) des gemeinsamen Überdeckungsfalz-Eckbereichs (11) zumindest so hoch liegt wie die Oberseite (42e) des freistehenden ersten Querüberdeckungsfalz-Endbereichs (42a).

2. Rahmen nach Anspruch 1, **dadurch gekennzeichnet, dass** sich der Längsüberdeckungsfalz (22) über die gesamte Länge des ersten Rahmenlängselements (2) erstreckt und dass sich der Querüberdeckungsfalz (42) über die gesamte Länge des ersten Rahmenquerelements (4) erstreckt, wobei der Längsüberdeckungsfalz (22) und der Querüberdeckungsfalz (42) im gemeinsamen Überdeckungsfalz-Eckbereich (11) miteinander verbunden sind.

3. Rahmen nach Anspruch 1 oder 2, **dadurch gekennzeichnet, dass** an der Oberseite (2d, 3d) des ersten oder zweiten Rahmenlängselements (2, 3) oder an der Unterseite (22c) des Längsüberdeckungsfalzes (22) Dichtungen (12, 13) angeordnet sind und/oder dass an der Oberseite (4d, 5d) des ersten oder zweiten Rahmenquerelements (4, 5) oder an der Unterseite (42c) des Querüberdeckungsfalzes (42) Dichtungen (14) angeordnet sind.

4. Rahmen nach einem der vorhergehenden Ansprüche, **dadurch gekennzeichnet, dass** sich an der Oberseite (3d) des zweiten Rahmenlängselements (3) über dessen Länge zumindest eine Nut und/oder zumindest ein Steg (3c) erstreckt und dass sich an der Unterseite (22c) des Längsüberdeckungsfalzes (22) über dessen Länge zu den Nuten bzw. Stegen (3c) des zweiten Rahmenlängselements (3) gegengleiche Stege und/oder Nuten (22d) erstrecken.

5. Rahmen nach einem der vorhergehenden Ansprüche, **dadurch gekennzeichnet, dass** sich an der Oberseite (5d) des zweiten Rahmenquerelements (5) über dessen Länge zumindest eine Nut und/oder zumindest ein Steg erstreckt und dass sich an der Unterseite (42c) des Querüberdeckungsfalzes (42) über dessen Länge zu den Nuten bzw. Stegen des zweiten Rahmenquerelements (5) gegengleiche Stege und/oder Nuten erstrecken.

6. Rahmen nach einem der vorhergehenden Ansprüche, **dadurch gekennzeichnet, dass** der Längsüberdeckungsfalz (22) einstückig mit dem ersten Rahmenlängselement (2) ausgebildet ist und/oder dass der Querüberdeckungsfalz (42) einstückig mit dem ersten Rahmenquerelement (4) ausgebildet ist.

7. Rahmen nach einem der vorhergehenden Ansprüche, **dadurch gekennzeichnet, dass** in der äußeren Seitenwand (2a, 3a) eines der beiden Rahmenlängselemente (2, 3) zumindest ein Vorsprung (2b) ausgebildet ist und in der äußeren Seitenwand (3a, 2a) des anderen der beiden Rahmenlängselemente (3, 2) zumindest eine Vertiefung oder ein Loch (3b) ausgebildet ist, wobei der Vorsprung (2b) des einen Rahmenlängselements (2) der Vertiefung bzw. dem Loch (3b) des anderen Rahmenlängselements (3) gegenüberliegt und die Vertiefung bzw. das Loch (3b) zumindest so groß dimensioniert ist wie der Vorsprung (2b).

8. Rahmen nach Anspruch 7, **dadurch gekennzeichnet, dass** die Vertiefung als gekrümmter oder schräger Kanal ausgebildet ist oder das Loch (3b) als gekrümmtes oder schräges Langloch ausgebildet ist und vorzugsweise der Vorsprung (2b) sich zu seinem freien Ende hin verjüngt.

9. Rahmen nach einem der vorhergehenden Ansprüche, **dadurch gekennzeichnet, dass** in der äußeren Seitenwand (4a, 5a) eines der beiden Rahmenquerelemente (4, 5) zumindest ein Vorsprung (4b) ausgebildet ist und in der Außenwand (5a, 4a) des anderen der beiden Rahmenquerelemente (5, 4) zumindest eine Vertiefung oder ein Loch (5b) ausgebildet ist, wobei der Vorsprung (4b) des einen Rahmenquerelements (4) der Vertiefung bzw. dem Loch (5b) des anderen Rahmenquerelements (5) gegenüberliegt und die Vertiefung bzw. das Loch (5b) zumindest so groß dimensioniert ist wie der Vorsprung (4b).

10. Rahmen nach einem der vorhergehenden Ansprüche, **dadurch gekennzeichnet, dass** die Unterseiten (2e, 3e, 4e, 5e) der Rahmenlängselemente (2, 3) und der Rahmenquerelemente (4, 5) in einer gemeinsamen Ebene liegen, die eine Auflagefläche (10) bildet.

11. Rahmen nach einem der vorhergehenden Ansprüche, **dadurch gekennzeichnet, dass** die äußeren Seitenwände (2a, 3a, 4a, 5a) der Rahmenlängselemente (2, 3) und der Rahmenquerelemente (4, 5) für eine Seite-an-Seite-Anordnung mehrerer Rahmen (1) ausgebildet sind.

12. Rahmen nach einem der vorhergehenden Ansprüche, **dadurch gekennzeichnet, dass** die Rahmenlängselemente (2, 3) und die Rahmenquerelemente (4, 5) aus Aluminium oder einem, vorzugsweise faserverstärkten, Kunststoff bestehen.

13. Rahmen nach einem der vorhergehenden Ansprüche, **dadurch gekennzeichnet, dass** im freistehenden ersten Endbereich (22a) des Längsüberdeckungsfalzes (22) ein Ausschnitt (22f) ausgebildet ist.

14. Rahmen nach einem der vorhergehenden Ansprüche, **dadurch gekennzeichnet, dass** im freistehenden ersten Endbereich (42a) des Querüberdeckungsfalzes (42) ein Ausschnitt (42g) ausgebildet ist.

15. Modul (60, 70, 80, 90) für ein modulares Photovoltaiksystem (100), umfassend einen Rahmen (1) nach einem der vorhergehenden Ansprüche und zumindest ein im Rahmen (1) angeordnetes Funktionselement (61, 71, 81, 91), wobei der Rahmen (1) eine Halterung aufweist, an der das Funktionselement (61, 71, 81, 91) in dichtender Weise befestigt ist.

16. Modul nach Anspruch 15, **dadurch gekennzeichnet, dass** die Halterung als Stege (7, 8), als U-Profil, als Rohrprofil oder als flache Dichtfläche ausgebildet ist, in denen/dem/der das Funktionselement (61, 71, 81, 91) aufgenommen ist.

17. Modul nach Anspruch 15 oder 16, **dadurch gekennzeichnet, dass** das Funktionselement (61, 71, 81, 91) ein Photovoltaik-Element ist.

18. Modul nach einem der Ansprüche 15 bis 17, **dadurch gekennzeichnet, dass** das Funktionselement (61, 71, 81, 91) ausgewählt ist aus einer Abdeckplatte, einem Zierelement, einem Belüftungselement, einem Element mit zumindest einem Durchlass, einem Fensterelement, einem Ortgangelement und/oder einem Dachfirstelement.

19. Modulares Photovoltaiksystem (100), **dadurch gekennzeichnet, dass** es aus einer Vielzahl von Modulen (60, 70, 80, 90) nach einem der Ansprüche 15 bis 18 zusammensetzbar ist, wobei zumindest eines der Module (60, 70, 88, 90) ein Funktionselement (61, 71, 81, 91) in Form eines Photovoltaik-Elements aufweist.

20. Photovoltaiksystem nach Anspruch 19, **dadurch gekennzeichnet, dass** die Module (60, 70, 80, 90) Seite-an-Seite anordenbar sind und die Unterseiten der Rahmen (1) der Module (60, 70, 88, 90) eine Auflagefläche (10) bilden.

## Claims

1. Frame (1) of a module (60, 70, 80, 90) for a modular photovoltaic system (100), wherein the frame (1) is composed of a first and a second mutually opposite longitudinal frame elements (2, 3) and a first and a second mutually opposite transverse frame elements (4, 5), wherein the transverse frame elements (4, 5) are connected to the longitudinal frame elements (2, 3), wherein the longitudinal frame elements (2, 3) and the transverse frame elements (4, 5) are formed as extruded profiles or rolled profiles, wherein a longitudinal overlap fold (22) extends away from the frame (1) from the upper side (2d) of the first longitudinal frame element (2) and wherein a transverse overlap fold (42) extends away from the frame (1) from the upper side (4d) of the first transverse frame element (4), wherein the longitudinal overlap fold (22) has a first longitudinal overlap fold end portion (22a) and a second longitudinal overlap fold end portion (22b), wherein the transverse overlap fold (42) has a first transverse overlap fold end portion (42a) and a second transverse overlap fold end portion (42b), wherein the first longitudinal overlap fold end portion (22a) and the first transverse overlap fold end portion (42a) are free-standing and the second longitudinal overlap fold end portion (22b) and the second transverse overlap fold end portion (42b) are joined together to form a common overlap fold end portion (11), wherein the underside (22c) of the longitudinal overlap fold (22) is at least as high as the upper side (3d) of the second longitudinal frame element (3) and the underside (42c) of the transverse overlap fold (42) is at least as high as the upper side (5d) of the second transverse frame element (5),
**characterised in that**
the lower side (42f) of the free-standing first transverse overlap fold end portion (42c) is at least as high as the upper side (22e) of the free-standing first longitudinal overlap fold end region (22a) and the lower side (11a) of the common overlap fold corner portion (11) is at least as high as the upper side (42e) of the free-standing first transverse overlap fold end portion (42a).

2. The frame according to claim 1, **characterised in that** the longitudinal overlap fold (22) extends over the entire length of the first longitudinal frame element (2) and **in that** the transverse overlap fold (42) extends over the entire length of the first transverse frame element (4), wherein the longitudinal overlap fold (22) and the transverse overlap fold (42) are connected to one another in the common overlap fold corner portion (11).

3. The frame according to claim 1 or 2, **characterised in that** seals (12, 13) are arranged on the upper side (2d, 3d) of the first or second longitudinal frame element (2, 3) or on the underside (22c) of the longitudinal overlap fold (22) and/or **in that** seals (14) are arranged on the upper side (4d, 5d) of the first or second transverse frame element (4, 5) or on the underside (42c) of the transverse overlap fold (42).

4. The frame according to any one of the preceding claims, **characterised in that** at least one groove and/or at least one web (3c) extends on the upper side (3d) of the second longitudinal frame element (3) over the length thereof, and **in that** webs and/or grooves (22d) which are opposite to the grooves or webs (3c) of the second longitudinal frame element (3) extend on the underside (22c) of the longitudinal overlap fold (22) over the length thereof.

5. The frame according to any one of the preceding claims, **characterised in that** at least one groove and/or at least one web extends along the upper side (5d) of the second transverse frame element (5) over the length thereof and **in that** webs and/or grooves which are opposite to the grooves and/or webs of the second transverse frame element (5) extend on the underside (42c) of the transverse overlap fold (42) over the length thereof.

6. The frame according to any one of the preceding claims, **characterised in that** the longitudinal overlap fold (22) is formed in one piece with the first longitudinal frame element (2) and/or **in that** the transverse overlap fold (42) is formed in one piece with the first transverse frame element (4).

7. The frame according to any one of the preceding claims, **characterised in that** at least one protrusion (2b) is formed in the outer side wall (2a, 3a) of one of the two longitudinal frame elements (2, 3) and at least one recess or hole (3b) is formed in the outer side wall (3a, 2a) of the other of the two longitudinal frame elements (3, 2), the protrusion (2b) of the one longitudinal frame element (2) corresponding to the recess or hole (3b) of the other longitudinal frame element (2), and the recess or hole (3b) being at least as large as the protrusion (2b).

8. The frame according to claim 7, **characterised in that** the recess is formed as a curved or oblique channel or the hole (3b) is formed as a curved or oblique elongated hole and preferably the projection (2b) tapers towards its free end.

9. The frame according to any one of the preceding claims, **characterised in that** at least one protrusion (4b) is formed in the outer side wall (4a, 5a) of one of the two transverse frame elements (4, 5) and at least one recess or hole (5b) is formed in the outer wall (5a, 4a) of the other of the two transverse frame elements (5, 4), the protrusion (4b) of one transverse frame element (4) corresponding to the recess or hole (5b) of the other transverse frame element (5), and the recess or hole (5b) being at least as large as the protrusion (4b).

10. The frame according to any one of the preceding claims, **characterised in that** the undersides (2e, 3e, 4e, 5e) of the longitudinal frame elements (2, 3) and of the transverse frame elements (4, 5) lie in a common plane which forms a bearing surface (10).

11. The frame according to any one of the preceding claims, **characterised in that** the outer side walls (2a, 3a, 4a, 5a) of the longitudinal frame elements (2, 3) and the transverse frame elements (4, 5) are designed for a side-by-side arrangement of a plurality of frames (1).

12. The frame according to any one of the preceding claims, **characterised in that** the longitudinal frame elements (2, 3) and the transverse frame elements (4, 5) are made of aluminium or a, preferably fibre-reinforced, plastic.

13. The frame according to any one of the preceding claims, **characterised in that** a cut-out (22f) is formed in the free-standing first end region (22a) of the longitudinal overlap fold (22).

14. The frame according to any one of the preceding claims, **characterised in that** a cut-out (42g) is formed in the free-standing first end region (42a) of the transverse overlap fold (42).

15. Module (60, 70, 80, 90) for a modular photovoltaic system (100), comprising a frame (1) according to any one of the preceding claims and at least one functional element (61, 71, 81, 91) arranged in the frame (1), wherein the frame (1) has a holder to which the functional element (61, 71, 81, 91) is fastened in a sealing manner.

16. The module according to claim 15, **characterised in that** the holder is designed as webs (7, 8), as a U-profile, as a tubular profile or as a flat sealing surface, in which the functional element (61, 71, 81, 91) is accommodated.

17. The module according to claim 15 or 16, **characterised in that** the functional element (61, 71, 81, 91) is a photovoltaic element.

18. The module according to any one of claims 15 to 17, **characterised in that** the functional element (61, 71, 81, 91) is selected from a cover plate, a decorative element, a ventilation element, an element with at least one aperture, a window element, a bargeboard element and/or a roof ridge element.

19. Modular photovoltaic system (100), **characterised in that** it can be assembled from a plurality of modules (60, 70, 80, 90) according to any one of claims 15 to 18, wherein at least one of the modules (60, 70, 88, 90) has a functional element (61, 71, 81, 91) in the form of a photovoltaic element.

20. The photovoltaic system according to claim 19, **characterised in that** the modules (60, 70, 80, 90) can be arranged side-by-side and the undersides of the frames (1) of the modules (60, 70, 88, 90) form a support surface (10).

## Revendications

1. Cadre (1) d'un module (60, 70, 80, 90) pour un système photovoltaïque modulaire (100), le cadre (1) étant composé d'un premier et d'un deuxième éléments longitudinaux de cadre (2, 3) opposés, ainsi que d'un premier et d'un deuxième éléments transversaux de cadre (4, 5) opposés, les éléments transversaux de cadre (4, 5) étant reliés aux éléments longitudinaux de cadre (2, 3), les éléments longitudinaux de cadre (2, 3) et les éléments transversaux de cadre (4, 5) étant formés en tant que profilés extrudés ou laminés, un pli de recouvrement longitudinal (22) s'étendant du cadre (1) depuis la face supérieure (2d) du premier élément longitudinal de cadre (2) et un pli de recouvrement transversal (42) s'étendant du cadre (1) depuis la face supérieure (4d) du premier élément transversal de cadre (4), le pli de recouvrement longitudinal (22) comportant une première zone terminale du pli de recouvrement longitudinal (22a) et une deuxième zone terminale du pli de recouvrement longitudinal (22b), le pli de recouvrement transversal (42) comportant une première zone terminale du pli de recouvrement transversal (42a) et une deuxième zone terminale du pli de recouvrement transversal (42b), la première zone terminale du pli de recouvrement longitudinal (22a) et la première zone terminale du pli de recouvrement transversal (42a) étant formées de manière autoportante, et la deuxième zone terminale du pli de recouvrement longitudinal (22b) et la deuxième zone terminale du pli de recouvrement transversal (42b) étant reliées entre elles pour former une zone terminale commune du pli de recouvrement (11), la face inférieure (22c) du pli de recouvrement longitudinal (22) étant située au moins aussi haut que la face supérieure (3d) du deuxième élément longitudinal de cadre (3), et la face inférieure (42c) du pli de recouvrement transversal (42) étant située au moins aussi haut que la face supérieure (5d) du deuxième élément transversal de cadre (5),
**caractérisé en ce que**
la face inférieure (42f) de la première zone terminale autoportante du pli de recouvrement transversal (42c) est située au moins aussi haut que la face supérieure (22e) de la première zone terminale autoportante du pli de recouvrement longitudinal (22a) et la face inférieure (11a) de la zone de coin commune du pli de recouvrement (11) est située au moins aussi haut que la face supérieure (42e) de la première zone terminale autoportante du pli de recouvrement transversal (42a).

2. Cadre selon la revendication 1, **caractérisé en ce que** le pli de recouvrement longitudinal (22) s'étend sur toute la longueur du premier élément longitudinal de cadre (2) et que le pli de recouvrement transversal (42) s'étend sur toute la longueur du première élément transversal de cadre (4), le pli de recouvrement longitudinal (22) et le pli de recouvrement transversal (42) étant reliés entre eux dans la zone de coin commune du pli de recouvrement (11).

3. Cadre selon la revendication 1 ou 2, **caractérisé en ce que** joints (12, 13) sont disposés sur la face supérieure (2d, 3d) du premier ou du deuxième élément longitudinal de cadre (2, 3) ou sur la face inférieure (22c) du pli de recouvrement longitudinal (22), et/ou **en ce que** joints (14) sont disposés sur la face supérieure (4d, 5d) du premier ou du deuxième élément transversal de cadre (4, 5) ou sur la face inférieure (42c) du pli de recouvrement transversal (42).

4. Cadre selon l'une des revendications précédentes, **caractérisé en ce qu'**au moins une rainure et/ou au moins une traverse (3c) s'étend sur la longueur du deuxième élément longitudinal de cadre (3) sur sa face supérieure (3d), et **en ce que** des traverses et/ou des rainures (22d) opposées respectivement aux rainures et traverses (3c) du deuxième élément longitudinal de cadre (3) s'étendent sur la longueur du pli de recouvrement longitudinal (22) sur sa face inférieure (22c).

5. Cadre selon l'une des revendications précédentes, **caractérisé en ce qu'**au moins une rainure et/ou au moins une traverse s'étend sur la longueur du deuxième élément transversal de cadre (5) sur sa face supérieure (5d), et **en ce que** des traverses et/ou des rainures opposées respectivement aux rainures et traverses du deuxième élément transversal de cadre (5) s'étendent sur la longueur du pli de recouvrement transversal (42) sur sa face inférieure (42c).

6. Cadre selon l'une des revendications précédentes, **caractérisé en ce que** le pli de recouvrement longitudinal (22) est formé d'une seule pièce avec le premier élément longitudinal de cadre (2) et/ou **en ce que** le pli de recouvrement transversal (42) est formé d'une seule pièce avec le premier élément transversal de cadre (4).

7. Cadre selon l'une des revendications précédentes, **caractérisé en ce qu'**au moins une saillie (2b) est formée dans la paroi latérale extérieure (2a, 3a) de l'un des deux éléments longitudinaux de cadre (2, 3) et au moins un évidement ou trou (3b) est formé dans la paroi latérale extérieure (3a, 2a) de l'autre des deux éléments longitudinaux de cadre (3, 2), la saillie (2b) d'un élément longitudinal de cadre (2) étant opposée à l'évidement ou trou (3b) de l'autre élément longitudinal de cadre (3) et l'évidement ou trou (3b) étant dimensionné au moins aussi grand que la saillie (2b).

8. Cadre selon la revendication 7, **caractérisée en ce que** l'évidement est formé comme un canal courbé ou incliné ou le trou (3b) est formé comme un trou oblong courbé ou incliné, et, de préférence, la saillie (2b) se rétrécit vers son extrémité libre.

9. Cadre selon l'une des revendications précédentes, **caractérisé en ce qu'**au moins une saillie (4b) est formée dans la paroi latérale extérieure (4a, 5a) de l'un des deux éléments transversaux de cadre (4, 5) et au moins un évidement ou trou (5b) est formé dans la paroi extérieure (5a, 4a) de l'autre des deux éléments transversaux de cadre (5, 4), la saillie (4b) d'un élément transversal de cadre (4) étant opposée à l'évidement ou trou (5b) de l'autre élément transversal de cadre (5) et l'évidement ou trou (5b) étant dimensionné au moins aussi grand que la saillie (4b).

10. Cadre selon l'une des revendications précédentes, **caractérisé en ce que** les faces inférieures (2e, 3e, 4e, 5e) des éléments longitudinaux de cadre (2, 3) et des éléments transversaux de cadre (4, 5) sont situées dans un plan commun qui forme une surface d'appui (10).

11. Cadre selon l'une des revendications précédentes, **caractérisé en ce que** les parois latérales extérieures (2a, 3a, 4a, 5a) des éléments longitudinaux de cadre (2, 3) et des éléments transversaux de cadre (4, 5) sont conçues pour une disposition côte à côte de plusieurs cadres (1).

12. Cadre selon l'une des revendications précédentes, **caractérisé en ce que** les éléments longitudinaux de cadre (2, 3) et les éléments transversaux de cadre (4, 5) sont constitués d'aluminium ou d'une matière plastique, de préférence renforcée par des fibres.

13. Cadre selon l'une des revendications précédentes, **caractérisé en ce qu'**une découpe (22f) est formée dans la première zone terminale autoportante (22a) du pli de recouvrement longitudinal (22).

14. Cadre selon l'une des revendications précédentes, **caractérisé en ce qu'**une découpe (42g) est formée dans la première zone terminale autoportante (42a) du pli de recouvrement transversal (42).

15. Module (60, 70, 80, 90) pour un système photovoltaïque modulaire (100), comprenant un cadre (1) selon l'une des revendications précédentes et au moins un élément fonctionnel (61, 71, 81, 91) disposé dans le cadre (1), le cadre (1) comportant un support sur lequel l'élément fonctionnel (61, 71, 81, 91) est fixé de manière étanche.

16. Module selon la revendication 15, **caractérisé en ce que** le support est formé comme traverses (7, 8), comme un profilé en U, comme un profilé tubulaire ou comme une surface d'étanchéité plane dans lesquelles/lequel/laquelle l'élément fonctionnel (61, 71, 81, 91) est reçu.

17. Module selon la revendication 15 ou 16, **caractérisé en ce que** l'élément fonctionnel (61, 71, 81, 91) est un élément photovoltaïque.

18. Module selon l'une des revendications 15 à 17, **caractérisé en ce que** l'élément fonctionnel (61, 71, 81, 91) est choisi parmi une plaque de recouvrement, un élément décoratif, un élément de ventilation, un élément avec au moins un passage, un élément de fenêtre, un élément de débord de pignon et/ou un élément de faîtage.

19. Système photovoltaïque modulaire (100), **caractérisé en ce qu'**il peut être assemblé à partir d'une pluralité de modules (60, 70, 80, 90) selon l'une des revendications 15 à 18, dans lequel au moins l'un des modules (60, 70, 88, 90) comporte un élément fonctionnel (61, 71, 81, 91) sous la forme d'un élément photovoltaïque.

20. Système photovoltaïque selon la revendication 19, **caractérisé en ce que** les modules (60, 70, 80, 90) peuvent être disposés côte à côte et les faces inférieures des cadres (1) des modules (60, 70, 88, 90) forment une surface d'appui (10).
